# EUROPEAN PATENT SPECIFICATION

(11) **EP 2 214 353 B1**
(45) Date of publication and mention of the grant of the patent: **16.01.2019**
(21) Application number: 08851372.6
(22) Date of filing: 22.10.2008
(51) Int. Cl.: H04L 29/06, H04L 12/14

(54) **METHOD AND APPARATUS FOR SETTING UP SESSION CONNECTION FOR THE PREPAID USERS**
VERFAHREN UND VORRICHTUNG ZUR EINRICHTUNG EINER SITZUNGSVERBINDUNG FÜR PREPAID-BENUTZER
PROCÉDÉ ET APPAREIL POUR ÉTABLIR UNE CONNEXION DE SESSION POUR DES UTILISATEURS EN MODE PRÉPAYÉ

(30) Priority: 24.10.2007 CN 200710181693
(43) Date of publication of application: 04.08.2010
(73) Proprietor: Alcatel-Lucent USA Inc., Murray Hill, NJ 07974 (US)
(72) Inventor: YIN, Aihao, Shandong 266101 (CN)
(74) Representative: Zinsinger, Norbert
(86) International application number: PCT/CN2008/001779
(87) International publication number: WO 2009/065297

(56) References cited:
- WO-A1-2004/023780
- WO-A1-2004/071011
- WO-A1-2004/071011
- CN-A- 1 635 726
- CN-A- 1 635 726
- CN-A- 1 913 432
- US-A- 5 818 930

## Description

### Field of the Invention

The present invention relates to communication network, and more particularly, to methods and apparatus for establishing a session connection for a prepayment user in a communication network, especially in a Next Generation Network (NGN).

### Background of the Invention

Nowadays, the NGN network and its applications, such as VoIP and IMS, are employed by an increasing number of manufacturers in the field of communication. There are also more and more services and applications based on IP networks. In an IP network, SIP protocol is a common call control protocol which can be supported by most terminals or servers to establish call (including voice, video and data) connections and to create more services.

While various services have been provided by utilizing specific advantages of the NGN network, for a smooth evolution, there are still a lot of conventional services in the NGN network, such as a prepayment service, especially the service of prepaid phone card. Generally, a user is required to buy a prepaid phone card with a card number and a password recorded thereon. In a process of calling, the user first dials an access code (e.g., an access code of 193300 used for long-distance phone cards in Shanghai area) and then receives a series of voice prompts. After each voice prompt, the user can input sequentially the type of language, the card number, the password and finally a called number. However, this approach suffers from the following drawbacks:
1) The user is required to input several pieces of information in several interactions in order to make a call, which is in convenience and time-consuming.
2) The user needs to check the card number and the password each time he or she is going to make a call.
3) The card number and the password are transmitted in a form of raw data over voice channels by a Dual-Tone Multi-Frequency (DTMF) signal, and thus they can be easily listened and stolen, especially in an IP network.
4) The service provider has to provide an Interactive Voice Response (IVR) device to play the voice prompts and gather card number information, which is expensive.
5) The number of user who can use the prepaid phone card service simultaneously is limited by the capacity of the IVR device.

Chinese patent application CN1913432 is further prior-art.

### Summary of the Invention

In view of the above defects in the prior art, it is an object of the present invention to provide a method and apparatus for establishing a session connection for a prepayment user in a terminal according to claims 1 and 9, and correspondingly, a method and apparatus for establishing a session connection for a prepayment user in a network server according to claims 5 and 13.

According to the first aspect of the present invention, a method for establishing a session connection for a prepayment user in a terminal is provided, which comprises steps of: sending to a network server a request message for establishing a session connection, wherein the request message contains characteristic information of supporting the prepayment function; receiving from the network server a reply message for requiring authentication information; sending an indication message for establishing the session connection to the network server, wherein the indication message contains all required authentication information of the prepayment user and a destination address.

According to the second aspect of the present invention, an apparatus for establishing a session connection for a prepayment user in a terminal is provided, which comprises: a first sending means for sending to a network server a request message for establishing a session connection, wherein the request message contains characteristic information of supporting the prepayment function; a first receiving means for receiving from the network server a reply message for requiring authentication information; a second sending means for sending to the network server an indication message for establishing the session connection, wherein the indication message contains all required authentication information of the prepayment user and a destination address.

According to the third aspect of the present invention, a method for establishing a session connection for a prepayment user in a network server is provided, which comprises steps of: receiving from a prepayment user terminal a request message for establishing a session connection; sending to the prepayment user terminal a reply message for requiring authentication information; receiving from the prepayment user terminal an indication message for establishing the session connection, wherein the indication message contains all required authentication information and a destination address; accomplishing the establishment of the session connection according to the received authentication information.

According to the fourth aspect of the present invention, an apparatus for establishing a session connection for a prepayment user in a network server is provided, which comprises: a first receiving means for receiving from a prepayment user terminal a request message for establishing a session connection; a first sending means for sending to the prepayment user terminal a reply message for requiring authentication information; a second receiving means for receiving from the prepayment user terminal an indication message for establishing the session connection, wherein the indication message contains all required authentication information and a destination address; a first connection establishing means for accomplishing the establishment of the session connection according to the received authentication information.

Compared with conventional prepayment services, the methods and apparatus according to the present invention have the following advantages:
1) The flow of user operation is simplified and the local interactive input device of the terminal, such as a liquid crystal display screen, is effectively utilized. In this way, the user just needs to input information in one interaction, which is time-saving.
2) The cost can be reduced for the service provider since the IVR device is not required to play voice prompts and collect DTMF signals.
3) The security can be improved since the card number and the password can be alphabets, instead of being limited to digits. Moreover, the password can be transmitted in an encrypted manner in a SIP message.
4) The capacity and performance of the system can be improved, since the IVR device which would become bottleneck of the system no longer exists.

### Brief Description of the Drawings

The features, characteristics and advantages of the present invention will be more apparent from the following description with reference to the figures, in which:
Fig. 1 is a schematic diagram showing a process for establishing a session connection according to an embodiment of the present invention;
Fig. 2 is a flowchart showing a method for establishing a session connection for a prepayment user in a terminal according to an embodiment of the present invention;
Fig. 3 is a flowchart showing a method for establishing a session connection for a prepayment user in a network server according to an embodiment of the present invention;
Fig. 4 is a block diagram of a terminal for establishing a session connection for a prepayment user according to an embodiment of the present invention;
Fig. 5 is a block diagram of a network server for establishing session connection for a prepayment user according to an embodiment of the present invention; and
Fig. 6 is an input interface on a terminal according to an embodiment of the present invention.

### Detailed Description of the Preferred Embodiments

To address the above drawbacks in the prepayment service in the prior art, a new method for implementing a prepayment service in a NGN network is provided.

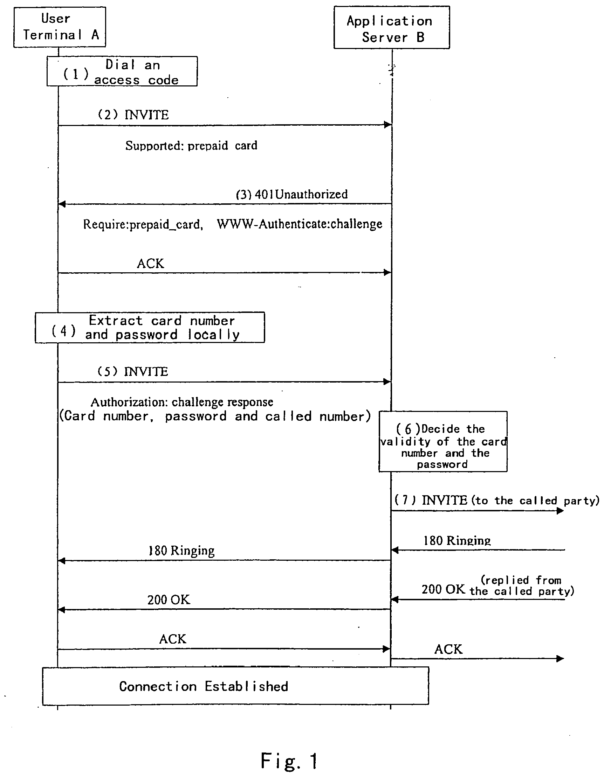

Fig. 1 is a flowchart showing a process for establishing a session connection for a prepaid phone card service according to an embodiment of the present invention. Only a user terminal of prepaid phone card (a SIP terminal in this example) and an application server are shown for the purpose of briefness.

The process shown in Fig. 1 comprises the following steps.
1) The user of the prepaid phone card dials an access code (e.g., 193300).
2) The SIP terminal A of the prepaid phone card user sends to the application server B an INVITE message having a "Supported" field in its header indicating the support for the prepaid phone card service process.
3) Upon receipt of the INVITE massage from the terminal A, the application server B sends to the terminal A a 401 Unauthorized message for requiring authentication information for the prepaid phone card service (e.g., a card number and a password) and information on the called party.
4) The terminal A extracts the card number and the password of the prepaid phone card user and the information on the called party, which are pre-configured by the user, from a local storage device, and prompts the user to enter or modify them.
5) The terminal A sends to the application server B a new INVITE message containing the authentication information such as the card number and the password of the prepaid phone card user.
6) The application server B determines the validity of the received card number and password by querying a database of prepaid phone cards.
7) Upon determining that the card number and the password are valid, the application server B sends to the called party an INVITE message requesting to establish a connection.

The subsequent call procedures are the same as those in the prior art and the detailed description thereof is thus omitted herein.

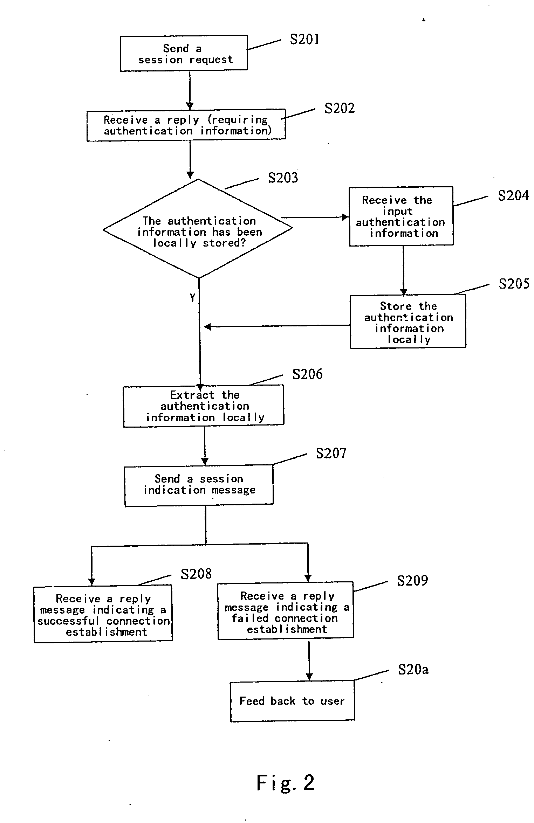

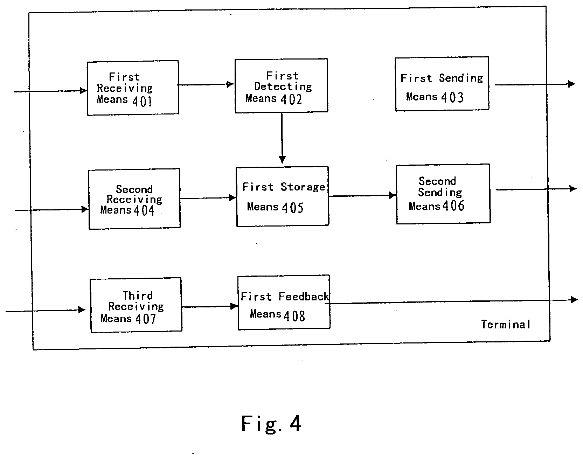

In the following, a method and apparatus for implementing the prepaid phone card service in a terminal will be detailed with reference to Figs. 2 and 4.

After the user inputs a particular access code, the terminal A knows that the user is going to use the prepaid phone card service. Then, the terminal A triggers step 5201 as shown in Fig. 2, in which a session request indicating the support for the prepaid phone card service is sent via a first sending means 403 as shown in Fig. 4 to the application server B. In order to indicate the feature of the prepaid phone card service in the SIP message, the SIP message is required to be extended and the corresponding SIP entities are required to support such function. Here are two examples. The first one, which is employed in the embodiment in Fig. 1, is shown in Table 1, in which the support for such service is indicated in the "Supported" field of the INVITE message. The second one is shown in Table 2, in which the support for such service is indicated in the "Supported" field of the OPTIONS message.

**Table 1**

| |
|---|
| INVITE sip:abc@lucent.com |
| ***Supported: prepaid_card*** |
| ... |
| SIP/2.0 401 Unauthorized |
| ***Require: prepaid_card*** |
| WWW-Authentication: |

**Table 2**

| |
|---|
| OPTIONS sip:abc@lucent.com |
| ***Supported: prepaid_card*** |
| ... |
| SIP/2.0 200 OK |
| ***Supported: prepaid_card*** |

Next, the terminal A receives, via a first receiving means 401, from the application server B a reply message (e.g., 401 Unauthorized or 200 OK) for requiring authentication information, as shown at step S202 in Fig. 2. The terminal A detects, by using a first detecting means 402, whether the authentication information of the user, such as the card number and the password, has been stored in a first local storage means 405.

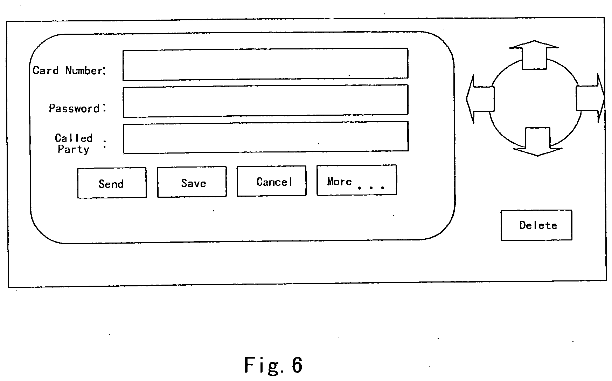

If the first detecting means 402 detects that the card number and the password of the user have not been locally stored, which is typically the case when the user uses this prepaid phone card service for the first time, the terminal A will prompt the user to input the card number, the password and the called number, for example by popping up an input interface as shown in Fig. 6. After completion of the user input, the terminal A receives via a second receiving means the card number, the password and the called number inputted by the user, as shown at step S204. Next, the card number and the password are locally stored in the first storage means 405 for future use, as shown at step S205. Then the process proceeds with step S206.

If the first detecting means 402 detects that the card number and the password have been locally stored, the user will be prompted to input only the called number. Again, the process then proceeds with step S206 in which the first storage means 405 extracts the card number and the password, and sends them to a second sending means 406 along with the called number. The second sending means 406 performs step S207 to send to the application server B a session indication message (an INVITE message in this example) indicating the card number, the password and the called number. Herein, the password can be encrypted and then transmitted in a ciphertext form. The encryption process has been well defined in SIP, and the description thereof is thus omitted herein. The above information can be placed in the "Authorization" header of the INVITE message with the value of "response" indicating the encrypted authentication information, as shown in Table 3.

**Table 3**

| |
|---|
| INVITE sip:abc@lucent.com |
| Authorization: Digest realm= "PPAS", |
| card_id= "24036493203543535", |
| destination= "02180550551", response= "4e4c8e53088 |
| de62e109a82dee4ad2a01", |
| nonce= "1023109332501", algorithm=MD5 |

After step S207, the terminal A waits for a reply from the application server B. There are two possible situations. In one situation, the terminal A receives via a third receiving means 407 a reply message indicating a successful connection as shown at step S208. The connection has been established at this time, and the subsequent steps are the same as those in the existing SIP process. In the other situation, the terminal A receives via the third receiving means 407 a reply message indicating a failed connection, as shown at step S209. In this case, the terminal A will display a corresponding one of various error messages, such as "Sorry. Insufficient Balance!", "Incorrect Password!" or "Please use a new card!", to the user via a first feedback means 408 according to the content of the reply message.

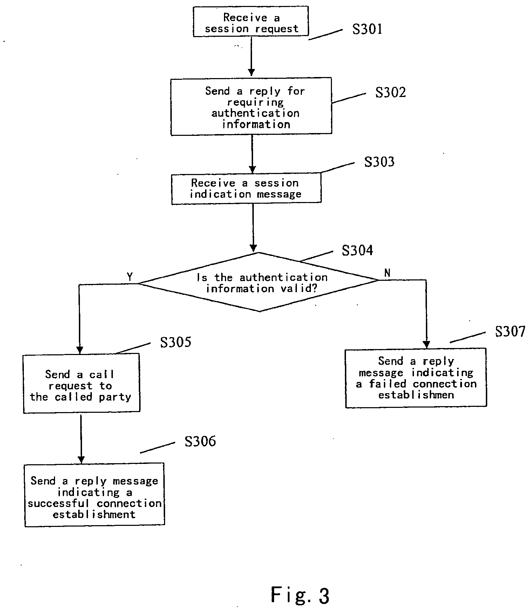

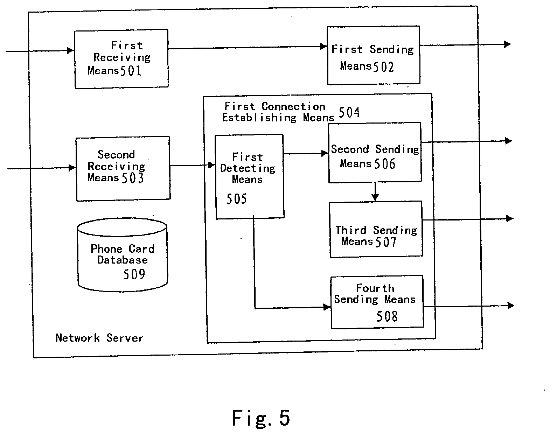

Accordingly, a method and apparatus for establishing a connection for a prepaid phone card user in the application server B will be described in detail with reference to Figs. 3 and 5, respectively.

At step S301, the application server B receives a session request message from the terminal A via a first receiving means 501, and recognizes it as a request for a prepaid phone card service. As authentication information is necessary for accessing this service, the application server B sends, via a first sending means 502, to the terminal A a reply message for requiring authentication information, as shown at step S302. There can be a variety of the reply messages, depending on the type of the received session request message. For example, if the session request message is an INVITE message as shown in Table 1, then the reply message can be a 401_Unauthorized message as shown in Table 1; and if the session request message is an OPTIONS message as shown in Table 2, then the reply message can be a 200_OK message as shown in Table 2.

After step S302, the application server B proceeds with step S303 where it receives, via a second receiving means 503, from the terminal A a session indication message (an INVITE message in this example) containing all authentication information of the user (e.g., the card number and the password) and the called number. Then, the application server B accomplishes the establishment of the connection according to the received authentication information by using a first connection establishing means 504.

In particular, at step S304, a first decision means 505 in the first connection establishing means 504 decides the validity of the received authentication information by querying a local database of prepaid phone cards 509. If the password is encrypted, the application server B can decrypt it using some existing technology. Herein, the decision of validity comprises decision of correctness of the card number and the password, decision of balance and the like.

If the decision at step S304 indicates that the authentication information is valid, a second sending means 506 in the first connection establishing means 504 can send a session request to the called party, as shown at step S305. Upon receipt of acknowledgement from the called party, a third sending means 507 in the first connection establishing means 504 sends to the calling party, i.e., the prepaid phone card terminal A, a reply message indicating a successful connection establishment, as shown at step S306.

If the decision at step S304 indicates that the authentication information is invalid, a fourth sending means 508 in the first connection establishing means 504 sends to the calling party, i.e., the prepaid phone card terminal A, a reply message indicating a failed connection establishment as well as cause of the failure, as shown at step S307.

While some embodiments of the present invention have been provided in the above description, they are not intended to limit the scope of the present invention. Various modifications and changes can be made to these embodiment by those who skilled in the art, without departing from the scope of the present invention. Such modifications and changes fall into the scope of the present invention.

## Claims

1. A method for establishing a session connection for a prepayment user in a SIP terminal, the method comprising steps of:
a) sending to a network server a request message for establishing a session connection, wherein the request message contains characteristic information of supporting the prepayment function, wherein the request message is a SIP INVITE or a SIP OPTIONS message and wherein the characteristic information of supporting the prepayment function is indicated in a "Supported" field of the request message;
b) receiving from the network server a SIP reply message for requiring authentication information;
f) sending a SIP indication message for establishing the session connection to the network server, wherein the SIP indication message contains all required authentication information of the prepayment user and a destination address.

2. The method of Claim 1, wherein, before the step f), the method further comprises steps of:
c) detecting whether there is authentication information of the prepayment user in a local storage device;
e) extracting all required authentication information of the prepayment user from the local storage device.

3. The method of Claim 2, wherein, before the step e), the method further comprising steps of:
if it is detected that there is no authentication information of the prepayment user in the local storage device at the step c), then
d1) receiving authentication information inputted by the user;
d2) storing the received authentication information in the local storage device.

4. The method of one of Claims 1 or 2 or 3, wherein further comprising steps of:
g1) receiving from the network server a reply message indicating whether the connection establishment is successful or failed;
g2) feeding different content back to the user according to different error prompt information, if the connection establishment is failed.

5. A method for establishing a session connection for a prepayment user in a network server, the method comprising steps of:
A) receiving from a prepayment user terminal, being a SIP terminal, a request message for establishing a session connection, wherein the request message is a SIP INVITE or a SIP OPTIONS message and wherein characteristic information of supporting a prepayment function is indicated in a "Supported" field of the request message;
B) sending to the prepayment user terminal a SIP reply message for requiring authentication information;
C) receiving from the prepayment user terminal a SIP indication message for establishing the session connection, wherein the SIP indication message contains all required authentication information and a destination address;
D) accomplishing the establishment of the session connection according to the received authentication information.

6. The method of Claim 5, wherein the step D) further comprises step of:
D1) querying a local database, and deciding the validity of the received authentication information.

7. The method of Claim 5 or 6, wherein the step D) further comprises step of:
D21) sending a session request message to a called party according to the received destination address so as to establish a session connection, if the received authentication information is valid;
D22) sending to the prepayment user terminal a reply message indicating that the establishment of the session connection is successful.

8. The method of Claim 5 or 6, wherein the step D) further comprises step of:
D3) sending to the prepayment user terminal a reply message indicating that the establishment of the session connection establishing is failed, if the received authentication information is invalid.

9. An apparatus for establishing a session connection for a prepayment user in a SIP terminal, the apparatus comprising:
a first sending means for sending to a network server a request message for establishing a session connection, wherein the request message contains characteristic information of supporting the prepayment function, wherein the request message is a SIP INVITE or a SIP OPTIONS message and wherein the characteristic information of supporting the prepayment function is indicated in a "Supported" field of the request message;
a first receiving means for receiving from the network server a SIP reply message for requiring authentication information;
a second sending means for sending to the network server a SIP indication message for establishing the session connection, wherein the SIP indication message contains all required authentication information of the prepayment user and a destination address.

10. The apparatus of Claim 9, wherein further comprising:
a first detecting means for detecting whether there is authentication information of the prepayment user in a first storage device;
a first storage means for extracting authentication information of the prepayment user stored in the first storage device.

11. The apparatus of Claim 10, wherein further comprising:
a second receiving means for receiving authentication information of the prepayment inputted by the user;
wherein the first storage means is further adapted for storing the received authentication information.

12. The apparatus of one of Claims 9 or 10 or 11, wherein further comprising:
a third receiving means for receiving from the network server a reply message indicating whether the connection establishment is successful or failed;
a first feedback means for feeding different content back to the user according to different error prompt information, if the connection establishment is failed.

13. An apparatus for establishing a session connection for a prepayment user in a network server, the apparatus comprising:
a first receiving means for receiving from a prepayment user terminal being a SIP terminal a request message for establishing a session connection, wherein the request message is a SIP INVITE or a SIP OPTIONS message and wherein characteristic information of supporting a prepayment function is indicated in a "Supported" field of the request message;
a first sending means for sending to the prepayment user terminal a SIP reply message for requiring authentication information;
a second receiving means for receiving from the prepayment user terminal a SIP indication message for establishing the session connection, wherein the SIP indication message contains all required authentication information and a destination address;
a first connection establishing means for accomplishing the establishment of the session connection according to the received authentication information.

14. The apparatus of Claim 13, wherein the first connection establishing means further comprises:
a first decision means for querying a local database and deciding the validity of the received authentication information.

15. The apparatus of Claim 13 or 14, wherein the first connection establishing means further comprises:
a second sending means for sending a session request message to a called party according to the received destination address, if the first decision means decides that the received authentication information is valid;
a third sending means for sending to the prepayment user terminal a reply message indicating that the establishment of the session connection is successful.

16. The apparatus of Claim 13 or 14, wherein the first connection establishing means further comprises:
D3) a fourth sending means for sending to the prepayment user terminal a reply message indicating that the establishment of the session connection establishing is failed, if the received authentication information is invalid.

## Patentansprüche

1. Verfahren zum Aufbauen einer Sitzungsverbindung für einen Vorauszahlungsanwender in einem SIP-Endgerät, wobei das Verfahren die folgenden Schritte umfasst:
a) Senden einer Anforderungsnachricht zum Aufbauen einer Sitzungsverbindung zu einem Netz-Server, wobei die Anforderungsnachricht kennzeichnende Informationen des Unterstützens der Vorauszahlungsfunktion enthält, wobei die Anforderungsnachricht eine SIP-EINLADUNGS- Nachricht oder eine SIP-OPTIONEN-Nachricht ist und die kennzeichnenden Informationen des Unterstützens der Vorauszahlungsfunktion in einem "Unterstützt"-Feld der Anforderungsnachricht angezeigt werden;
b) Empfangen einer SIP-Antwortnachricht von dem Netz-Server, um Authentifizierungsinformationen zu verlangen; und
f) Senden einer SIP-Anzeigenachricht zu dem Netz-Server, um die Sitzungsverbindung aufzubauen, wobei die SIP-Anzeigenachricht alle erforderlichen Authentifizierungsinformationen des Vorauszahlungsanwenders und eine Zieladresse enthält.

2. Verfahren nach Anspruch 1, wobei das Verfahren vor dem Schritt f) ferner die folgenden Schritte umfasst:
c) Detektieren, ob Authentifizierungsinformationen des Vorauszahlungsanwenders in einer lokalen Speichereinrichtung vorliegen; und
e) Extrahieren aller erforderlichen Authentifizierungsinformationen des Vorauszahlungsanwenders aus der lokalen Speichereinrichtung.

3. Verfahren nach Anspruch 2, wobei das Verfahren vor dem Schritt e) ferner die folgenden Schritte umfasst:
dann, wenn in Schritt c) detektiert wird, dass keine Authentifizierungsinformationen des Vorauszahlungsanwenders in der lokalen Speichereinrichtung vorliegen,
d1) Empfangen von Authentifizierungsinformationen, die durch den Anwender eingegeben wurden; und
d2) Speichern der empfangenen Authentifizierungsinformationen in der lokalen Speichereinrichtung.

4. Verfahren nach Anspruch 1, 2 oder 3, das ferner die folgenden Schritte umfasst:
g1) Empfangen einer Antwortnachricht, die anzeigt, ob der Verbindungsaufbau erfolgreich oder gescheitert ist, von dem Netz-Server; und
g2) Zurückführen verschiedener Inhalte zu dem Anwender gemäß verschiedenen Fehlerhinweisinformationen, wenn der Verbindungsaufbau gescheitert ist.

5. Verfahren zum Aufbauen einer Sitzungsverbindung für einen Vorauszahlungsanwender in einem Netz-Server, wobei das Verfahren die folgenden Schritte umfasst:
A) Empfangen einer Anforderungsnachricht zum Aufbauen einer Sitzungsverbindung von einem Vorauszahlungsanwenderendgerät, das ein SIP-Endgerät ist, wobei die Anforderungsnachricht eine SIP-EINLADUNGS-Nachricht oder eine SIP-OPTIONEN-Nachricht ist und die kennzeichnenden Informationen des Unterstützens einer Vorauszahlungsfunktion in einem "Unterstützt"-Feld der Anforderungsnachricht angezeigt werden;
B) Senden einer SIP-Antwortnachricht zu dem Vorauszahlungsanwenderendgerät, um Authentifizierungsinformationen zu verlangen;
C) Empfangen einer SIP-Anzeigenachricht von dem Vorauszahlungsanwenderendgerät, um die Sitzungsverbindung aufzubauen, wobei die SIP-Anzeigenachricht alle erforderlichen Authentifizierungsinformationen des Vorauszahlungsanwenders und eine Zieladresse enthält; und
D) Erreichen des Aufbauens der Sitzungsverbindung gemäß den empfangenen Authentifizierungsinformationen.

6. Verfahren nach Anspruch 5, wobei der Schritt D) ferner den folgenden Schritt umfasst:
D1) Abfragen einer lokalen Datenbank und Entscheiden über die Gültigkeit der empfangenen Authentifizierungsinformationen.

7. Verfahren nach Anspruch 5 oder 6, wobei der Schritt D) ferner die folgenden Schritte umfasst:
D21) Senden einer Sitzungsanforderungsnachricht zu einer gerufenen Seite gemäß der empfangenen Zieladresse, um eine Sitzungsverbindung aufzubauen, wenn die empfangenen Authentifizierungsinformationen gültig sind; und
D22) Senden einer Antwortnachricht, die anzeigt, dass das Aufbauen der Sitzungsverbindung erfolgreich ist, zu dem Vorauszahlungsanwenderendgerät.

8. Verfahren nach Anspruch 5 oder 6, wobei der Schritt D) ferner den folgenden Schritt umfasst:
D3) Senden einer Antwortnachricht, die anzeigt, dass das Aufbauen des Sitzungsverbindungsaufbauens fehlgeschlagen ist, zu dem Vorauszahlungsanwenderendgerät, wenn die empfangenen Authentifizierungsinformationen ungültig sind.

9. Vorrichtung zum Aufbauen einer Sitzungsverbindung für einen Vorauszahlungsanwender in einem SIP-Endgerät, wobei die Vorrichtung Folgendes umfasst:
ein erstes Sendemittel, um eine Anforderungsnachricht zum Aufbauen einer Sitzungsverbindung zu einem Netz-Server zu senden, wobei die Anforderungsnachricht kennzeichnende Informationen des Unterstützens der Vorauszahlungsfunktion enthält, wobei die Anforderungsnachricht eine SIP-EINLADUNGS-Nachricht oder eine SIP-OPTIONEN-Nachricht ist und die kennzeichnenden Informationen des Unterstützens der Vorauszahlungsfunktion in einem "Unterstützt"-Feld der Anforderungsnachricht angezeigt werden;
ein erstes Empfangsmittel, um eine SIP-Antwortnachricht von dem Netz-Server zu empfangen, um Authentifizierungsinformationen zu verlangen; und
ein zweites Sendemittel, um eine SIP-Anzeigenachricht zu dem Netz-Server zu senden, um die Sitzungsverbindung aufzubauen, wobei die SIP-Anzeigenachricht alle erforderlichen Authentifizierungsinformationen des Vorauszahlungsanwenders und eine Zieladresse enthält.

10. Vorrichtung nach Anspruch 9, die ferner Folgendes umfasst:
ein erstes Detektionsmittel, um zu detektieren, ob Authentifizierungsinformationen des Vorauszahlungsanwenders in einer ersten Speichereinrichtung vorliegen; und
ein erstes Speichermittel, um Authentifizierungsinformationen des Vorauszahlungsanwenders, die in der ersten Speichereinrichtung gespeichert sind, zu extrahieren.

11. Vorrichtung nach Anspruch 10, die ferner Folgendes umfasst:
ein zweites Empfangsmittel, um Authentifizierungsinformationen der Vorauszahlung, die durch den Anwender eingegeben wurden, empfangen;
wobei das erste Speichermittel ferner ausgelegt ist, um die empfangenen Authentifizierungsinformationen zu speichern.

12. Vorrichtung nach Anspruch 9, 10 oder 11, die ferner Folgendes umfasst:
ein drittes Empfangsmittel, um eine Antwortnachricht, die anzeigt, ob der Verbindungsaufbau erfolgreich oder gescheitert ist, von dem Netz-Server zu empfangen; und
ein erstes Rückführungsmittel, um verschiedene Inhalte gemäß verschiedenen Fehlerhinweisinformationen zu dem Anwender zurückzuführen, wenn der Verbindungsaufbau gescheitert ist.

13. Vorrichtung zum Aufbauen einer Sitzungsverbindung für einen Vorauszahlungsanwender in einem Netz-Server, wobei die Vorrichtung Folgendes umfasst:
ein erstes Empfangsmittel, um von einem Vorauszahlungsanwenderendgerät, das ein SIP-Endgerät ist, eine Anforderungsnachricht zum Aufbauen einer Sitzungsverbindung zu empfangen, wobei die Anforderungsnachricht eine SIP-EINLADUNGS-Nachricht oder eine SIP-OPTIONEN-Nachricht ist und die kennzeichnenden Informationen des Unterstützens einer Vorauszahlungsfunktion in einem "Unterstützt"-Feld der Anforderungsnachricht angezeigt werden;
ein erstes Sendemittel, um eine SIP-Antwortnachricht zu dem Vorauszahlungsanwenderendgerät zu senden, um Authentifizierungsinformationen zu verlangen;
ein zweites Empfangsmittel, um eine SIP-Anzeigenachricht von dem Vorauszahlungsanwenderendgerät zu empfangen, um die Sitzungsverbindung aufzubauen, wobei die SIP-Anzeigenachricht alle erforderlichen Authentifizierungsinformationen des Vorauszahlungsanwenders und eine Zieladresse enthält; und
ein erstes Verbindungsaufbaumittel, um das Aufbauen der Sitzungsverbindung gemäß den empfangenen Authentifizierungsinformationen zu erreichen.

14. Vorrichtung nach Anspruch 13, wobei das erste Verbindungsaufbaumittel ferner Folgendes umfasst:
ein erstes Entscheidungsmittel, um eine lokale Datenbank abzufragen und über die Gültigkeit der empfangenen Authentifizierungsinformationen zu entscheiden.

15. Vorrichtung nach Anspruch 13 oder 14, wobei das erste Verbindungsaufbaumittel ferner Folgendes umfasst:
ein zweites Sendemittel, um einer Sitzungsanforderungsnachricht zu einer gerufenen Seite gemäß der empfangenen Zieladresse senden, um eine Sitzungsverbindung aufzubauen, wenn das erste Entscheidungsmittel entscheidet, dass die empfangenen Authentifizierungsinformationen gültig sind; und
ein drittes Sendemittel, um eine Antwortnachricht, die anzeigt, dass das Aufbauen der Sitzungsverbindung erfolgreich ist, zu dem Vorauszahlungsanwenderendgerät zu senden.

16. Vorrichtung nach Anspruch 13 oder 14, wobei das erste Verbindungsaufbaumittel ferner Folgendes umfasst:
D3) ein viertes Sendemittel, um eine Antwortnachricht, die anzeigt, dass das Aufbauen des Sitzungsverbindungsaufbauens fehlgeschlagen ist, zu dem Vorauszahlungsanwenderendgerät zu senden, wenn die empfangenen Authentifizierungsinformationen ungültig sind.

## Revendications

1. Une méthode d'établissement d'une connexion de session pour un utilisateur de prépaiement dans un terminal SIP, la méthode comprenant les étapes de :
a) envoyer, à un serveur de réseau, un message de demande pour établir une connexion de session, dans lequel le message de demande contient des informations caractéristiques de prise en charge de la fonction de prépaiement, dans lequel le message de demande est un message d'invitation SIP ou un message d'options SIP, et dans lequel les informations caractéristiques de prise en charge de la fonction de prépaiement sont indiquées dans un champ « pris en charge » du message de demande ;
b) recevoir, en provenance du serveur de réseau, un message de réponse SIP visant à demander des informations d'authentification ;
f) envoyer un message d'indication SIP pour établir la connexion de session au serveur de réseau, dans lequel le message d'indication SIP contient toutes les informations d'authentification requises de l'utilisateur de prépaiement et une adresse de destination.

2. La méthode de la revendication 1, dans lequel, avant l'étape f), la méthode comprend en outre les étapes de :
c) détecter s'il existe des informations d'authentification de l'utilisateur de prépaiement dans un dispositif de stockage local ;
e) extraire toutes les informations d'authentification requises de l'utilisateur de prépaiement du dispositif de stockage local.

3. La méthode de la revendication 2, dans lequel, avant l'étape e), la méthode comprend en outre les étapes de :
s'il est détecté qu'il n'existe pas d'informations d'authentification de l'utilisateur de prépaiement dans le dispositif de stockage local à l'étape c), alors
d1) recevoir les informations d'authentification saisies par l'utilisateur ;
d2) stocker les informations d'authentification reçues dans le dispositif de stockage local.

4. La méthode de l'une des revendications 2 et 3, comprenant en outre les étapes de :
g1) recevoir, en provenance du serveur de réseau, un message de réponse indiquant si l'établissement de connexion a réussi ou échoué ;
g2) renvoyer un contenu différent à l'utilisateur selon différentes informations d'invite d'erreur, si l'établissement de connexion échoue.

5. Une méthode d'établissement d'une connexion de session pour un utilisateur de prépaiement dans un serveur de réseau, la méthode comprenant les étapes de :
A) recevoir, en provenance d'un terminal d'utilisateur de prépaiement, étant un terminal SIP, un message de demande pour établir une connexion de session, dans lequel le message de demande est un message d'invitation SIP ou un message d'options SIP, et dans lequel des informations caractéristiques de prise en charge d'une fonction de prépaiement sont indiquées dans un champ « pris en charge » du message de demande ;
B) envoyer, au terminal d'utilisateur de prépaiement, un message de réponse SIP pour demander des informations d'authentification ;
C) recevoir, en provenance du terminal d'utilisateur de prépaiement, un message d'indication SIP pour établir la connexion de session, dans lequel le message d'indication SIP contient toutes les informations d'authentification requises et une adresse de destination ;
D) mettre en oeuvre l'établissement de la connexion de session selon les informations d'authentification reçues.

6. La méthode de la revendication 5, dans lequel l'étape D) comprend en outre l'étape de :
D1) interroger une base de données locale, et déterminer la validité des informations d'authentification reçues.

7. La méthode de la revendication 5 ou 6, dans lequel l'étape D) comprend en outre l'étape de :
D21) envoyer un message de demande de session à une partie appelée selon l'adresse de destination reçue, afin d'établir une connexion de session, si les informations d'authentification reçues sont valides ;
D22) envoyer, au terminal d'utilisateur de prépaiement, un message de réponse indiquant que l'établissement de connexion de session a réussi.

8. La méthode de la revendication 5 ou 6, dans lequel l'étape D) comprend en outre l'étape ci-dessous consistant à :
D3) envoyer, au terminal d'utilisateur de prépaiement, un message de réponse indiquant que l'établissement de connexion de session a échoué, si les informations d'authentification reçues sont non valides.

9. Un appareil destiné à établir une connexion de session pour un utilisateur de prépaiement dans un terminal SIP, l'appareil comprenant :
un premier moyen d'envoi pour envoyer, à un serveur de réseau, un message de demande pour établir une connexion de session, dans lequel le message de demande contient des informations caractéristiques de prise en charge de la fonction de prépaiement, dans lequel le message de demande est un message d'invitation SIP ou un message d'options SIP, et dans lequel les informations caractéristiques de prise en charge de la fonction de prépaiement sont indiquées dans un champ « pris en charge » du message de demande ;
un premier moyen de réception pour recevoir, en provenance du serveur de réseau, un message de réponse SIP visant à demander des informations d'authentification ;
un deuxième moyen d'envoi pour envoyer, au serveur de réseau, un message d'indication SIP pour établir la connexion de session, dans lequel le message d'indication SIP contient toutes les informations d'authentification requises de l'utilisateur en mode prépaiement et une adresse de destination.

10. L'appareil de la revendication 9, comprenant en outre :
un premier moyen de détection pour détecter s'il existe des informations d'authentification de l'utilisateur de prépaiement dans un premier dispositif de stockage ;
un premier moyen de stockage pour extraire des informations d'authentification de l'utilisateur de prépaiement stockées dans le premier dispositif de stockage.

11. L'appareil de revendication 10, comprenant en outre :
un deuxième moyen de réception pour recevoir des informations d'authentification du prépaiement saisies par l'utilisateur ;
dans lequel le premier moyen de stockage est en outre apte à stocker les informations d'authentification reçues.

12. L'appareil de l'une des revendications 9 ou 10 ou 11, comprenant en outre :
un troisième moyen de réception pour recevoir, en provenance du serveur de réseau, un message de réponse indiquant si l'établissement de connexion a réussi ou échoué ;
un premier moyen de rétroaction pour renvoyer un contenu différent à l'utilisateur selon différentes informations d'invite d'erreur, si l'établissement de connexion a échoué.

13. Un appareil destiné à établir une connexion de session pour un utilisateur de prépaiement dans un serveur de réseau, l'appareil comprenant :
un premier moyen de réception pour recevoir, en provenance d'un terminal d'utilisateur en mode prépaiement, lequel est un terminal SIP, un message de demande pour établir une connexion de session, dans lequel le message de demande est un message d'invitation SIP ou un message d'options SIP, et dans lequel des informations caractéristiques de prise en charge d'une fonction de prépaiement sont indiquées dans un champ « pris en charge » du message de demande ;
un premier moyen d'envoi pour envoyer, au terminal d'utilisateur de prépaiement, un message de réponse SIP visant à demander des informations d'authentification ;
un deuxième moyen de réception pour recevoir, en provenance du terminal d'utilisateur de prépaiement, un message d'indication SIP pour établir la connexion de session, dans lequel le message d'indication SIP contient toutes les informations d'authentification requises et une adresse de destination ;
un premier moyen d'établissement de connexion pour mettre en oeuvre l'établissement de connexion de session selon les informations d'authentification reçues.

14. L'appareil de la revendication 13, dans lequel le premier moyen d'établissement de connexion comprend en outre :
un premier moyen de détermination pour interroger une base de données locale et déterminer la validité des informations d'authentification reçues.

15. L'appareil de la revendication 13 ou 14, dans lequel le premier moyen d'établissement de connexion comprend en outre :
un deuxième moyen d'envoi pour envoyer un message de demande de session à une partie appelée selon l'adresse de destination reçue, si le premier moyen de détermination détermine que les informations d'authentification reçues sont valides ;
un troisième moyen d'envoi pour envoyer, au terminal d'utilisateur de prépaiement, un message de réponse indiquant que l'établissement de connexion de session a réussi.

16. L'appareil de la revendication 13 ou 14, dans lequel le premier moyen d'établissement de connexion comprend en outre :
D3) un quatrième moyen d'envoi pour envoyer, au terminal d'utilisateur de prépaiement, un message de réponse indiquant que l'établissement de connexion de session a échoué, si les informations d'authentification reçues sont non valides.
